# EUROPEAN PATENT APPLICATION

(11) **EP 4 803 937 A1**
(43) Date of publication of application: **09.09.2026**
(21) Application number: 26160918.4
(22) Date of filing: 26.02.2026
(51) Int. Cl.: G01V 1/38

(54) **AN OCEAN-BOTTOM NODE**

(30) Priority: 03.03.2025 US 202563765901 P; 20.01.2026 US 202619454276
(71) Applicant: TGS-NOPEC Geophysical Company, Houston, TX 77041 (US)
(72) Inventor: MORRIS, Michael, Houston, TX 77041 (US); HOGSTAD, Andreas, 0283 Oslo (NO); ØSTREM, Erik, 0283 Oslo (NO); NIKIRK, Chris, Houston, TX 77041 (US); KERRIGAN, James, Weybridge, KT13 0NY (GB)
(74) Representative: Zacco Norway AS

(57) **Abstract**

An ocean-bottom node (1) includes a node housing (2) having an interior main cavity defined by a wall and opposite first and second ends; and one or more insert elements configured to be removably inserted into the main cavity. The insert elements and the main cavity have complementary shapes and dimensions, wherein the one or more insert elements provide internal structural support to the node housing when arranged in the main cavity. The insert elements include a structural element that prevents the node wall from deflecting inward when the node housing is subjected to compressive forces and can include an interior space configured to house any of batteries, electronics, data storage, and/or ballast, sensor, or other component. The ocean-bottom node can be a seismic node, holding one or more geophones and ancillary components.

## Description

### Cross-reference to related applications

This application claims benefit of United States Provisional Patent Application Serial Number 63/765,901, filed on 03 March 2025, entitled "A structural element for a seismic node", which is incorporated herein by reference.

### Technical field of the disclosure

The present disclosure relates generally to subsea data acquisition and analysis, and more particularly to seismic nodes for deployment on a seabed below a body of water, so-called ocean-bottom nodes (OBN).

### Background

An ocean-bottom node (OBN), also referred to as a deep-water node, is a subsea pressure vessel designed for large working depths, although OBNs can also be used at shallower depths. Some OBNs can be used at depths of, for example, 4000 m or more. Large quantities of such node devices are placed in a predefined pattern on a seabed for the purpose of recording seismic activity or other events and conditions over an extended period. An ocean-bottom node therefore typically contains a sensor, for example a geophone, a clock, one or more batteries, a data storage medium, and other components. Ocean-bottom nodes record seismic data and that data is subsequently downloaded or otherwise transferred to be used in seismic imaging. The node body must have a structural integrity to withstand compressive loads and prevent deformation or collapse when subjected to external pressure. The node body material is typically aluminum or high-grade steel.

Existing technology includes ocean-bottom nodes characterized by relatively thick walls and a fixed internal supporting framework. A person of ordinary skill, with the benefit of this disclosure, will recognize that there is a need for an ocean-bottom node with an improved housing and support.

### Brief description of the drawings

The disclosure will become clear from the following description of embodiments of the disclosure, given as non-restrictive examples below, with reference to the attached schematic drawings, wherein:
Fig. 1 is a side view of a geophysical surveying system comprising a plurality of ocean-bottom nodes placed on a seabed;
Fig. 2 is a perspective view of an assembled ocean-bottom node according to some embodiments herein;
Fig. 3 is a perspective view of the ocean-bottom node illustrated in Fig. 2, but where certain components are not shown to illustrate the ocean-bottom node housing;
Fig. 4 is a perspective view of a first housing member of an embodiment of the ocean-bottom node housing, illustrating the interior of the first housing member;
Fig. 5 is a perspective view of a second housing member of an embodiment of the ocean-bottom node housing, illustrating the interior of the second housing member;
Fig. 6 is a perspective view of an ocean-bottom node according to some embodiments herein, comprising first and second housing members, where a second, upper, housing member is made transparent in order to visualize certain structures and components inside the ocean-bottom node housing;
Fig. 7 corresponds to Fig. 6 but the second housing member is not shown to illustrate a plurality of insert elements arranged in the first housing member;
Fig. 8 is a plan view of the components illustrated in Fig. 7;
Fig. 9 is an exploded view of the components illustrated in Fig. 7;
Fig. 10 is a perspective view of some embodiments of an insert element;
Fig. 11 is a perspective view of an embodiment of an insert element containing a battery pack where the insert element is made transparent in order to visualize the battery pack; and
Fig. 12 is a perspective view of an embodiment of an insert element comprising a potting material arranged in an upper region of an interior space of the insert element.

### Detailed description

The following description may use terms such as "horizontal", "vertical", "lateral", "back and forth", "up and down", "upper", "lower", "inner", "outer", "forward", "rear", "underneath", "above", "bottom", "top", etc. These terms generally refer to the views and orientations as shown in the drawings and that are associated with a normal use of the invention. The terms are used for the reader's convenience only and shall not be limiting.

In case of conflict between a word or term used in this specification and a word or term used in a document or documents that may be incorporated herein by reference, the definition or meaning consistent with this specification should be adopted for the purposes of understanding this disclosure.

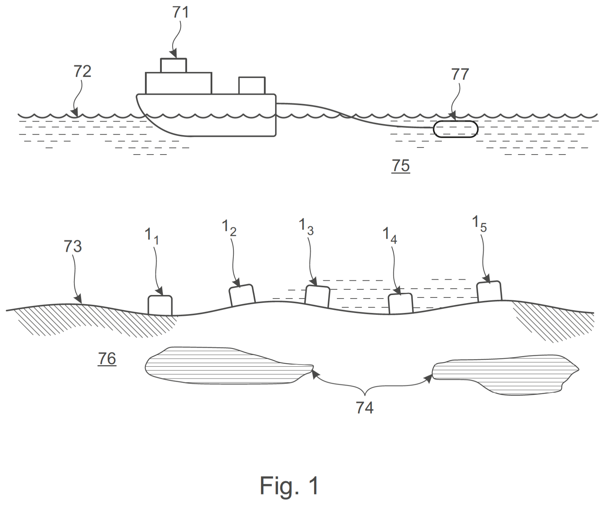

Fig. 1 shows a geophysical surveying system that includes a plurality of ocean-bottom nodes 1₁₋₅ arranged on a seabed 73 below a body of water 75. It should be understood that the geophysical surveying system can include fewer or more ocean-bottom nodes 1₁₋ₙ than the five illustrated. The ocean-bottom nodes 1₁₋ₙ are commonly placed in a predefined pattern on the seabed 73 for an extended period of time and is configured for sensing and recording seismic activity in the subterranean formation 76 beneath the seabed 73. In one application, the geophysical surveying system comprises a survey vessel 71, which is shown floating on the water surface 72. The survey vessel 71 contains seismic acquisition equipment, such as navigation control, seismic source control, seismic receiver control, and recording equipment. A seismic source control controls activation of the one or more seismic sources 77 at selected times or locations. The survey vessel 71 can tow one or more sources 77 through the body of water 75.

Sources 77 can be can any type of acoustic source, including air guns, marine vibrators, sparkers, or any other type of acoustic energy source. Sources 77 are configured to emit acoustic waves into the subterranean formation 76, and the ocean-bottom nodes 1₁₋ₙ are configured to sense and record acoustic waves reflected from the subterranean formation 76, for example to detect subterranean hydrocarbon reservoirs 74. The ocean-bottom nodes 1₁₋ₙ can be retrieved to the water surface 72 where data in individual ocean-bottom nodes can be downloaded and analyzed. Alternatively, data can be collected from the ocean-bottom nodes 1₁₋ₙ while the nodes are in the water by, for example, data transmission or remote operated vehicles that receive the data while the ocean-bottom nodes 1₁₋ₙ are on the seabed 73.

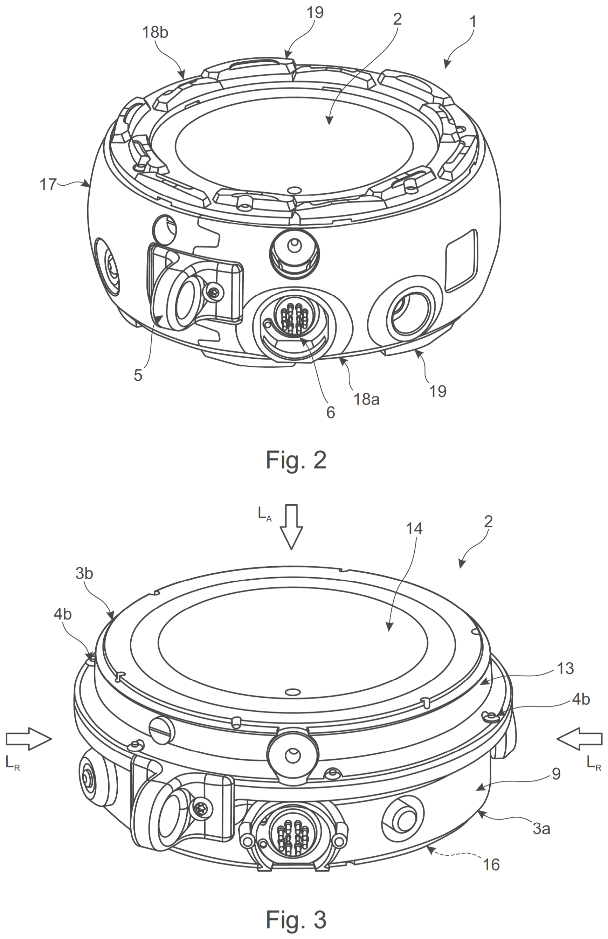

Referring to Fig. 2, an embodiment of the ocean-bottom node 1 disclosure includes a node housing 2 which is a pressure vessel and is configured for being placed on a seabed and for enclosing various components. In the illustrated embodiment, the node housing 2 can include a shock-absorbing cladding 17 arranged around a portion of the node housing 2, and first and second coupling members 18a, 18b, which in some embodiments can be described as cleat rings, arranged on opposite sides of the node housing 2. The cladding 17 is intended for protecting the node housing 2 and its contents and therefore can include a resilient material. The coupling members 18a,18b may in embodiments be ring shaped and each include a plurality of projections, or cleats, 19. Fig. 2 illustrates the disclosed ocean-bottom node 1 in an orientation in which it is commonly placed on a seabed, and projections 19 on the first coupling member 18a contribute to connecting the ocean-bottom node to the seabed or other support element and/or surface. The node housing 2 may include an external connection member 5 by which the node 1 can be handled, positioned, and retrieved from a seabed. In some embodiments, the ocean-bottom node 1 includes port 6, which is an interface to connect to electronics and other components inside the node housing, for example for downloading data recorded by ocean-bottom node. 1

Referring additionally to Fig. 3, in which the above-mentioned cladding and coupling members are not shown, the node housing 2 includes in some illustrated embodiments a first housing member 3a and a second housing member 3b. The first housing member 3a can include a first sidewall 9 and a first end portion 16 (not visible but indicated by the dashed line in Fig. 3) and - in the illustrated embodiment - is configured to rest on a support element and/or surface, such as a seabed, among others. The second housing member 3b can include a second sidewall 13 and a second end portion 14. The first sidewall 9 and the second sidewall 13 can be cylindrical sidewalls as shown, and the first and second housing members 3a, 3b are releasably connectable to each other, either directly or indirectly, by one or more fasteners. In some embodiments, the fasteners may comprise a plurality of screws 4.

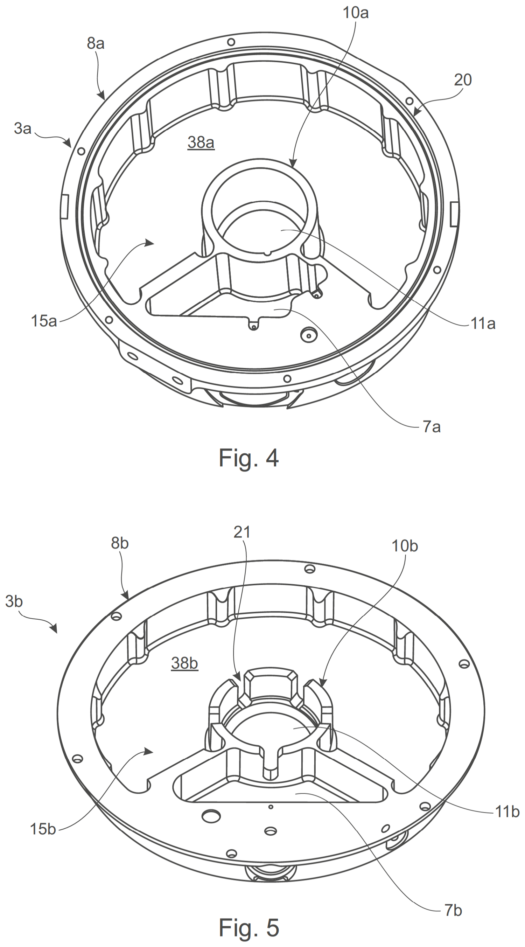

Referring additionally to Figs. 4 and 5, the first and second housing members 3a, 3b have respective first and second main cavities 15a, 15b that together form an enclosed main cavity in the node housing 2 when the first and second housing members are interconnected, for example as illustrated in Fig. 3. Reference number 38a denotes a first interior surface of the first end portion 16, and reference number 38b denotes a second interior surface of the above-mentioned second end portion 14.

The first and second housing members can also include respective first and second compartments 7a, 7b that together form an enclosed compartment in the node housing 2 when the first and second housing members are interconnected.

In some embodiments, the first and second housing members 3a, 3b also comprise respective first and second cylindrical support members 10a, 10b arranged centrally in the respective housing member. The cylindrical support members 10a, 10b can be integral parts of the node housing 2, for example machined into the housing member 3a, 3b, or can be removable and configured for being positioned within the node housing 2.

In the illustrated embodiment, the main cavities 15a, 15b are defined by the respective support member, sidewall, and end portion. The cylindrical support members 10a, 10b can be solid members or - as illustrated - have respective first and second internal chambers 11a, 11b that form an enclosed chamber in the housing 2 when the first and second housing members are interconnected.

In some embodiments (not illustrated), only one of the housing members 3a or 3b includes a cylindrical support member 10a or 10b, in which case the one cylindrical support member 10a or 10b can extend into the main cavity 15b or 15a in the other housing member 3b or 3a and into abutment with the respective first or second interior surface 38b or 38a when the first and second housing members are interconnected. A single cylindrical support member 10a or 10b can therefore provide support to both the first and the second end portions.

When the node housing 2 is in an assembled state, the cylindrical support members 10a, 10b provide axial support to the first end portion 16 and the second end portion 14 and enables the node housing 2 to withstand axial compressive loads L_{A} (see Fig. 3). The first and second end portions 16, 14 can therefore have a thinner wall thickness than the wall thicknesses of the prior art node housings.

The first and second housing members 3a, 3b can comprise respective first and second sealing surfaces 8a, 8b, and in some embodiments a sealing surface (in the illustrated embodiment, the first sealing surface 8a) may comprise a circumferential groove 20 configured for receiving an O-ring (not shown) to provide a sealing connection between the first and second housing members 3a, 3b when these are interconnected to form a closed pressure vessel.

Although the node housing 2 in illustrated embodiments may have a cylindrical shape defined by a cylindrical sidewall and two ends, as illustrated, it should be understood that the node housing can have any shape and in general can be defined as a pressure vessel having an outer, sealed, wall with at least one interior main cavity. Some embodiments provide that other housing shapes can be rectangular, hexagonal, octagonal, elliptical, etc. The node housing members can be forged, machined, and/or formed by extrusion. The housing members can be made of any type of material having sufficient rigidity and compressive strength for withstanding pressures at deep waters. Some embodiments provide that the housing material may include, for example, aluminum, plastic, and/or steel, among others.

The connection between the first and second housing members may be anywhere along the sidewalls. The interface between the lower housing member and the upper housing member (i.e., the above-mentioned sealing surfaces) is illustrated as being parallel with the coupling member 18a (Fig. 2), but the disclosure shall not be limited to this orientation. Also, referring back to Fig. 3, while the first sidewall 9 is taller than the second sidewall 13 in the illustrated embodiment of the disclosure, other sidewall height ratios and configurations are within the scope of the disclosure. For example, in one embodiment, the above-mentioned main cavity, compartments and structures can be entirely in a first housing member while a second housing member can be a plain cover or lid. The disclosure is also not limited to two interconnectable housing members as illustrated but can include any ocean-bottom node housing having at least one internal and sealed main cavity.

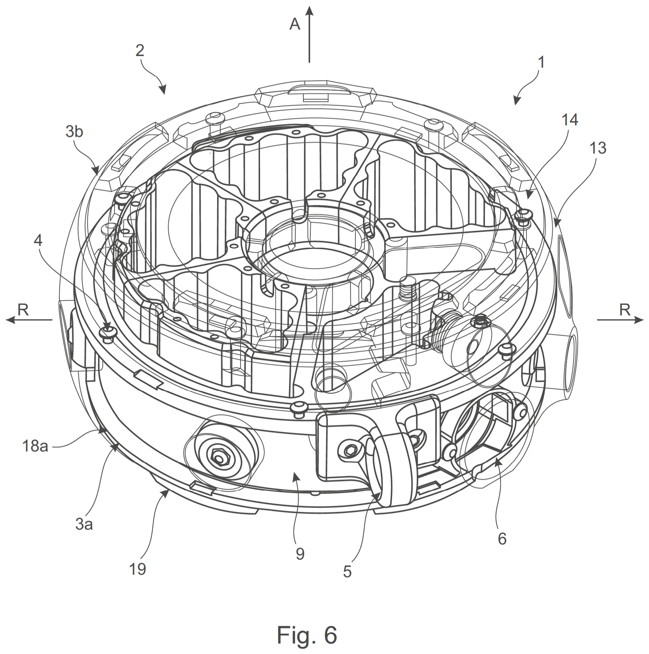

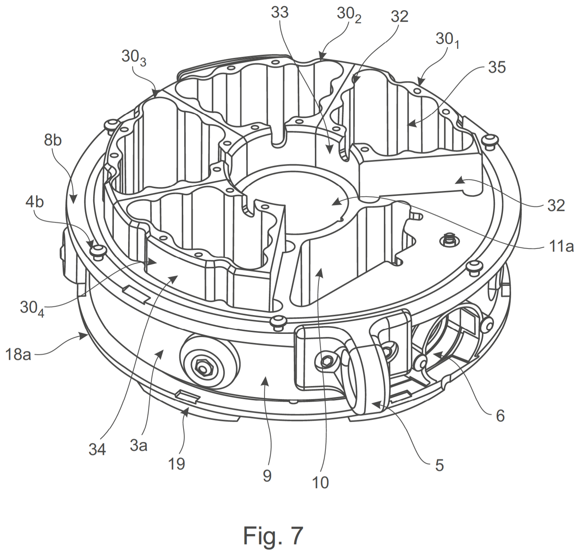

Referring additionally to Figs. 6-9, insert elements 30 are structural elements that can be removably inserted in the node housing main cavity 15a, 15b. The illustrated embodiments include four such insert elements 30₁₋₄, but embodiments can include fewer or more insert elements 30, shaped and dimensioned to fit snugly inside the main cavity 15a, 15b. In Fig. 6, arrow A indicates an axial direction and arrows R indicate radial directions. In embodiments, insert elements 30 are structural elements that provide structural support to housing

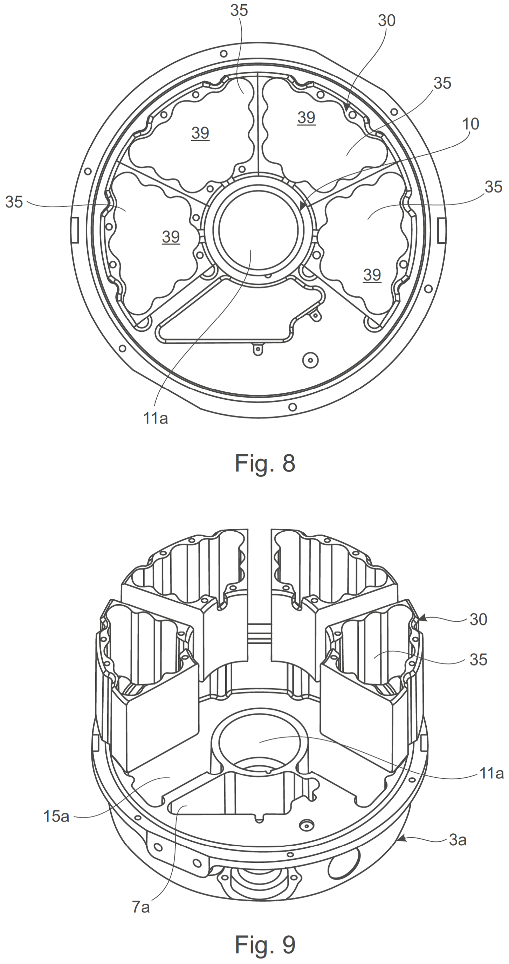

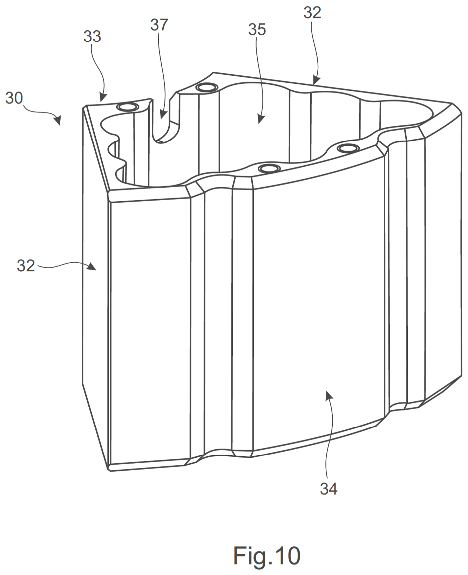

Referring also to the illustrated embodiment in Fig. 10, any or all of the insert elements 30 may include an interior space 35 defined by element walls. In the illustrated embodiment, interior space is defined by a bottom, an outer wall 34, an inner wall 33, and two connecting walls 32 interconnecting the outer and inner walls. Reference number 39 denotes the interior surface of the insert element bottom (see Fig. 8). A cover (not illustrated) can optionally be provided to enclose the interior space 35 according to some embodiments herein. Some embodiments may not include a bottom.

In the illustrated embodiments, the node insert elements 30 may be identical, each having a generally trapezoidal shape when viewed from above. However, embodiments are not limited to this shape. For a node housing 2 having a cylindrical shape, such as the illustrated disclosure, the outer wall 34 can include an arc shape corresponding to the arc shape of the node housing first and second sidewalls 9, 13, and the outer wall 34 diameter and the node housing sidewalls' 9, 13 diameter may be complementary such that the outer wall 34 abuts against a portion of the node housing sidewalls when the insert element 30 installed in the housing.

In the illustrated embodiments, the inner wall 33 of the insert element 30 can include an arc shape corresponding to the arc shape of the cylindrical support members 10a, 10b. The inner wall diameter and the cylindrical support member diameter may be complementary such that the inner wall 33 abuts against a portion of the cylindrical support member when the insert element 30 is installed in the main cavity 15, 15b.

As mentioned above, in the case only one of the housing members 3a or 3b includes a cylindrical support member 10a or 10b that extends into the main cavity 15b or 15a in the other housing member 3b or 3a and into abutment with the respective interior first or second surface 38b or 38a when the first and second housing members are interconnected, a single cylindrical support member 10a or 10b can provide support to both the first and the second end portions, and also support for the insert elements 30.

Therefore, as the outer wall 34 is configured to abut against a portion of the sidewalls 9, 13 and the inner wall 33 is configured to abut against a portion of the cylindrical support members 10a, 10b, the connecting walls 32 (interconnecting the outer 34 and inner 33 walls) transmit radial compressive loads L_{R} (see Fig. 3) from the sidewalls 9, 13 toward the central support members when the node insert elements 30 are installed in the node housing 2. Each insert element 30 thus constitutes a structural support insert and functions as a beam that provides internal structural support to the node housing. In some embodiments, insert element 30 provides internal structural support to the node housing like a spoke supports the rim of a wheel. The tight tolerance between the outer wall 34 (i.e. the outer end of the spoke) and the interior of the sidewalls prevents the sidewalls 9, 13 from deflecting inward when the assembled node housing 2 is subjected to compressive forces. In some embodiments, connecting walls 32 can protrude radially beyond outer wall 34 to contact and support the interior surface of sidewalls 9, 13.

In some embodiments, the one or more insert elements 30 are configured and dimensioned to abut against at least a portion of the first interior surface 38a and against at least a portion of the second interior surface 38b when the first and second housing members 3a, 3b are interconnected to form the housing 2, and thereby provide structural support to the first and the second end portions.

The central support members 10a, 10b can have a shape other than the cylindrical shape illustrated. Alternatively, support members 10a, 10b can be omitted, in which case the insert elements 30 can be shaped and dimensioned to abut against each other.

Each insert element 30 provides support to both the ends and the sidewall of the housing 2. The insert element 30 can be made of any type of material having sufficient rigidity and compressive strength to support the node housing 2, including, for example, extruded aluminum, plastic, and/or steel, among others.

The insert elements 30 and the main cavity 15a, 15b have tight tolerances so that there is little or no gap between the node insert elements 30 and the housing 2 in either the radial direction R or axial direction A. The tight tolerances prevent inward movement of either the sidewall or the ends when the node is subjected to compressive forces such as the high pressure of deep water. In some embodiments, the node housing 2 supported by the structural elements can withstand 400 bars of pressure, 550 bars, or more. In some embodiments, the node housing 2 supported by the structural elements does not deform at depths of 3000 m or more. In some embodiments, the node housing supported by the structural elements does not deform at depths of 4000 m or more. The node housing 2 can thus be reinforced by the insertable and removable insert elements 30.

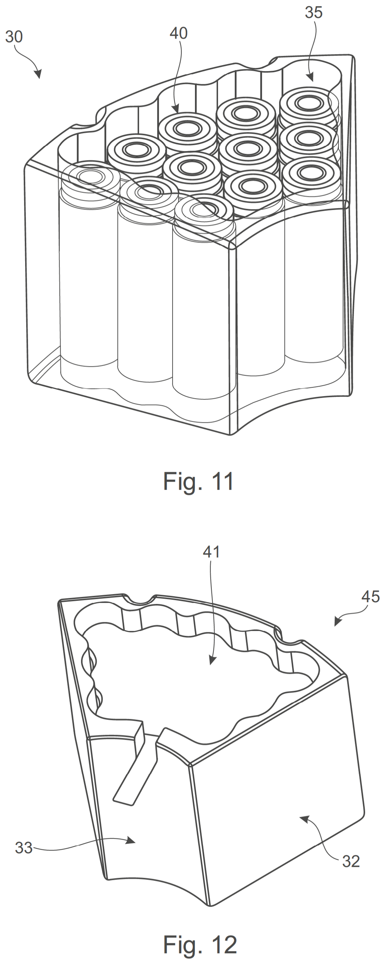

In some embodiments, the interior space 35 of the insert element 30 can be used to house various components used by the node including, without limitation, batteries, electronics, data storage, sensors, and/or ballast, among others. For example, referring to Fig. 11 and Fig. 12, in some embodiments a battery pack 40 can be inserted into the interior space 35 and then potted in place to seal the battery pack 40 and create a structural insert battery pack 45. This structural insert battery pack 45, which comprises an insert element 30 and a battery pack 40 with one or more batteries and potting material 41 arranged in the interior space 35, can be removed from the main cavity 15a or 15b, and another insert element 30 or structural insert battery pack 45 can be inserted. A plurality of insert elements 30 containing one or more battery packs 40 and/or other components can be placed in the node housing 2 to provide structural support while utilizing the space within the node insert element 30. The insert elements 30 with battery packs 40 or other components in place can be removed from and reinserted into main cavity 15a or 15b as a module. Electronics and other components can also be located outside of the insert elements 30, for example in the compartment 7a in the node housing 2 and in the chamber 11a in the support member 10a. Reference number 21 (see Fig. 5) and reference number 37 denote recesses via which electrical cables (not shown) can be routed between the chamber 11a, the interior space 35, and the compartment 7a. Chamber 11a can hold one or more sensors, for example one or more geophones or hydrophones, and the compartment 7a can hold a clock, a data storage medium and other components.

Access to the compartment 7a can be provided via the above-mentioned port 6 through the sidewall 9, and the port 6 can be sealed prior to deploying ocean-bottom node 1 into water.

In some embodiments, an ocean-bottom node can include:
a node housing having an interior main cavity defined by a wall and opposite first and second ends; and
one or more insert elements configured to be removably inserted into the main cavity;
wherein the one or more insert elements and the main cavity have complementary shapes and dimensions, wherein the one or more insert elements provide internal structural support to the node housing when arranged in the main cavity.

In some embodiments, the ocean-bottom node includes a support member arranged in the main cavity and the one or more insert element that can include a first region configured for abutment against a portion of the housing wall and a second region configured for abutment against the support member centrally arranged in the main cavity, wherein the one or more insert element can include a structural element that prevents the node wall from deflecting inward when the node housing is subjected to compressive forces.

The one or more insert elements can include an interior space configured to house any of batteries, electronics, data storage, ballast, sensor, or other component. The node housing can include a cylindrical shape, a rectangular shape, a pentagonal shape, a hexagonal shape, an octagonal shape, or any multi-sided shape. In some embodiments, the node housing is formed using one of a forged material, a machined material, a cast material, and an extruded material. The insert element can include at least one of aluminum, plastic and steel. In some embodiments, a tolerance between the node housing and the one or more insert element prevents inward movement of the sidewall, the first end and the second end. The node housing can be supported by the one or more insert element to a pressure of more than 400 bars without deforming. In some embodiments, the one or more insert element includes a substantially trapezoidal shape when viewed from the top. The insert element can include an arc shape having a diameter similar to an inner diameter of the node housing sidewall and the support member can be cylindrical and include a portion of the node housing. The support member can include an insert that is removably positioned within the cavity.

In some embodiments, the insert element includes a spoke and/or beam that transmits radial compressive forces to the support member centered in the interior of the ocean-bottom node, and a tolerance between an end of the spoke and/or beam prevents a sidewall from deflecting responsive to compressive forces. The spoke and/or beam can be supported at each end by inner and outer arcs of the insert element.

In some embodiments, the ocean-bottom node comprises a structural insert battery pack comprising a battery pack arranged in an interior space of the insert element. Some embodiments can include a potting material covering the battery pack, whereby the battery pack is sealed within the interior space.

In some embodiments, the node housing includes a first housing member, a second housing member, and a fastener device, whereby the first and second housing members can be assembled to form a pressure vessel containing at least the main cavity.

In some embodiments, the ocean-bottom node is a seismic node.

It is also provided an ocean-bottom node, which includes:
a node housing having an interior main cavity defined by a wall and opposite first and second ends; and
one or more insert elements configured to be removably inserted into the main cavity, and at least one insert element includes a battery pack inserted into an interior space of the insert element to provide a structural insert battery pack. The battery pack can be sealed in place in the insert element by, for example, a sealant such as potting material. The one or more insert elements and the main cavity can have complementary shapes and dimensions, wherein the one or more insert elements provide internal structural support to the node housing when arranged in the cavity. In some embodiments, a support member is arranged in the main cavity and the one or more insert element includes a first region configured for abutment against a portion of the housing wall and a second region configured for abutment against the support member centrally arranged in the main cavity, wherein the one or more insert element includes a structural element that prevents the node wall from deflecting inward when the node housing is subjected to compressive forces.

In some embodiments, the ocean-bottom node includes a chamber configured for holding one or more sensors, for example one or more geophones, and a compartment configured for holding a clock, a data storage medium and other components.

Although the present disclosure relates to an ocean-bottom node for subsea seismic data acquisition and analysis, it should be understood that the disclosure is applicable to ocean-bottom nodes designed for also other purposes.

In the embodiments described above, various features and details are shown in combination. The fact that several features are described with respect to a particular example should not be construed as implying that those features by necessity have to be included together in all embodiments of the invention. Conversely, features that are described with reference to different embodiments should not be construed as mutually exclusive. As a person skilled in the art readily will understand, embodiments that incorporate any subset of features described herein and that are not expressly interdependent have been contemplated by the inventor and are part of the intended disclosure. However, explicit description of all such embodiments would not contribute to the understanding of the principles of the invention, and consequently some permutations of features have been omitted for the sake of simplicity or brevity.

## Claims

1. An ocean-bottom node comprising:
a node housing having an interior main cavity defined by a housing wall and opposite first and second end portions; and
one or more insert elements configured to be removably inserted into the main cavity and having shapes and dimensions complementary to shapes and dimensions of the node housing, and the one or more insert elements provide internal structural support to the node housing when positioned in the main cavity.

2. The ocean-bottom node of claim 1, further comprising a support member centrally positioned in the main cavity and wherein the one or more insert elements comprises a first region configured for abutment against a portion of the housing wall and a second region configured for abutment against the support member, wherein the one or more insert elements comprises a structural element that prevents the node wall from deflecting inward when the node housing is subjected to compressive forces.

3. The ocean-bottom node of claim 2, wherein the support member is cylindrical and comprises a portion of the node housing.

4. The ocean-bottom node of claim 2, wherein the support member can be removably positioned within the cavity.

5. The ocean-bottom node of claim 1, wherein the one or more insert elements is configured and dimensioned to abut against at least a portion of a first interior surface of said first end portion and against at least a portion of a second interior surface of said second end portion when the first and second housing members are interconnected to form the housing and thereby provides structural support to the first and the second end portions.

6. The ocean-bottom node of claim 1, wherein the one or more insert elements comprises an interior space configured to house any of batteries, electronics, data storage, ballast, sensor, or other component.

7. The ocean-bottom node of claim 1, wherein the node housing is formed using one of a forged material, a machined material, a cast material, and an extruded material.

8. The ocean-bottom node of claim 1, wherein the one or more insert elements comprises at least one of aluminum, plastic, and steel.

9. The ocean-bottom node of claim 1, wherein the node housing comprises a cylindrical shape and the main cavity is defined by an inner cylindrical wall.

10. The ocean-bottom node of claim 1, wherein a tolerance between the node housing and the one or more insert elements prevents inward movement of the sidewall, the first end and the second end.

11. The ocean-bottom node of claim 1, wherein the node housing is supported by the one or more insert elements to a pressure of more than 400 bars of pressure without deforming.

12. The ocean-bottom node of claim 1, wherein the one or more insert elements comprises a substantially trapezoidal shape when viewed from an end.

13. The ocean-bottom node of claim 1, wherein the one or more insert elements comprises an arc shape having a diameter similar to an inner diameter of the node housing sidewall.

14. The ocean-bottom node of claim 1, wherein the one or more insert elements comprises a spoke and/or beam that transmits radial compressive forces to the support member centered in the interior of the node.

15. The ocean-bottom node of claim 1, further comprising a structural insert battery pack comprising a battery pack arranged in an interior space of the insert element.

16. The ocean-bottom node of claim 1, wherein a plurality of insert elements are placed in the node housing to provide structural support while utilizing space within the insertable structural supports.

17. The ocean-bottom node of claim 1, wherein the node housing comprises a first housing member, a second housing member, and a fastener device, wherein the first and second housing members can be assembled to form a pressure vessel containing at least the main cavity.

18. An ocean-bottom node, comprising:
a node housing having an interior main cavity defined by a wall and opposite first and second ends; and
one or more insert elements configured to be removably inserted into the main cavity, and at least one insert element comprises a battery pack inserted into an interior space of the insert element to provide a structural insert battery pack.

19. The ocean-bottom node of claim 18, wherein the one or more insert elements and the main cavity have complementary shapes and dimensions, wherein the one or more insert elements provide internal structural support to the node housing when arranged in the cavity.

20. The ocean-bottom node of claim 18, further comprising a support member arranged in the main cavity and wherein the one or more insert elements comprises a first region configured for abutment against a portion of the housing wall and a second region configured for abutment against the support member centrally arranged in the main cavity, wherein the one or more insert elements comprises a structural element that prevents the node wall from deflecting inward when the node housing is subjected to compressive forces.

21. The ocean-bottom node of claim 18, wherein the support member comprises a chamber configured for holding one or more sensors, comprising one or more geophones.
